# FASCICULE DE BREVET EUROPEEN

(11) **EP 3 380 279 B1**
(45) Date de publication et mention de la délivrance du brevet: **02.09.2020**
(21) Numéro de dépôt: 16798462.4
(22) Date de dépôt: 16.11.2016
(51) Int. Cl.: B25J 9/16, G05B 19/423

(54) **PROCEDE DE PROGRAMMATION D'UN EFFORT A EXERCER PAR UN ROBOT**
VERFAHREN ZUR PROGRAMMIERUNG EINER AUF EINEN ROBOTER ANGEWANDTEN KRAFT
METHOD FOR PROGRAMMING A FORCE TO BE APPLIED BY A ROBOT

(30) Priorité: 25.11.2015 FR 1561360
(43) Date de publication de la demande: 03.10.2018
(73) Titulaire: Commissariat à l'Énergie Atomique et aux Énergies Alternatives, 75015 Paris (FR)
(72) Inventeur: MEASSON, Yvan, 91120 Palaiseau (FR); LAMY, Xavier, 92190 Meudon (FR)
(74) Mandataire: Lavialle, Bruno François Stéphane
(86) Numéro de dépôt international: PCT/EP2016/077897
(87) Numéro de publication internationale: WO 2017/089204

(56) Documents cités:
- US-A- 5 880 956

## Description

La présente invention concerne le domaine de la robotique et plus particulièrement, mais pas exclusivement, la robotique collaborative.

### ETAT DE LA TECHNIQUE

Il est connu d'utiliser des robots pour effectuer des tâches dites « au contact », c'est-à-dire des tâches au cours desquelles les robots sont en contact avec un élément de leur environnement soit directement soit par l'intermédiaire d'un outil ou d'une pièce portée par les robots. Ces tâches comprennent des opérations de polissage, d'ébavurage, d'assemblage...

De tels robots comprennent généralement un bras équipé d'une motorisation reliée à une unité informatique de commande qui est programmée pour commander la motorisation du bras pour déplacer une extrémité de travail du bras robotisé le long d'une trajectoire correspondant à la tâche à réaliser et pour faire exercer à l'extrémité de travail un effort en des points prédéterminés de la trajectoire correspondant à la tâche à réaliser.

Ces robots sont donc simultanément commandables en position et en effort selon des degrés de liberté propres à la tâche.

La programmation de la trajectoire est habituellement réalisée par codage ou par apprentissage. La première méthode consiste à introduire, directement dans le programme de commande de la motorisation du bras, les instructions de commande de la motorisation permettant d'amener l'extrémité de travail (couramment appelée effecteur) du bras en des points définissant la trajectoire souhaitée. La deuxième méthode consiste à apprendre des points de passage en déplaçant l'extrémité du robot avec un organe de commande quelconque de type console ou joys-tick.

Les robots collaboratifs permettent une méthode d'apprentissage par démonstration. Elle consiste à faire déplacer l'extrémité de travail par un opérateur le long de la trajectoire souhaitée pendant que les positions successives du bras sont mémorisées soit ponctuellement soit en continu. US5880956 montre une méthode d'apprentissage.

La programmation de l'effort que le bras motorisé doit exercer est toujours réalisée par codage et consiste à introduire, directement dans le programme de commande de la motorisation du bras, les instructions de commande de la motorisation permettant à l'extrémité de travail du bras d'exercer l'effort souhaité en chaque point définissant la trajectoire souhaitée.

### OBJET DE L'INVENTION

Un but de l'invention est de simplifier la programmation des robots en effort.

### BREF EXPOSE DE L'INVENTION

A cet effet, on prévoit, selon l'invention, un procédé de programmation d'un effort à exercer par une extrémité de travail d'un robot le long d'au moins une partie d'une trajectoire préprogrammée de l'extrémité de travail, le procédé comprenant les étapes de :
- déplacer l'extrémité de travail du robot sur ladite au moins une partie de la trajectoire préprogrammée, la motorisation du robot étant asservie pour maintenir l'extrémité de travail en position sans consigne d'effort,
- en au moins une position au cours du déplacement, faire exercer sur l'extrémité de travail, par un opérateur, un effort qui est opposé à celui à appliquer lors de la tâche et qui a une intensité proportionnelle à celui à appliquer lors de la tâche,
- déterminer l'effort à appliquer lors de la tâche à partir de l'effort résistant exercé par le robot pour maintenir l'extrémité de travail sur la trajectoire,
- mémoriser l'effort ainsi déterminé en relation avec la position de l'extrémité de travail lors de l'exercice de l'effort opposé

La trajectoire peut avoir été préprogrammée par l'une quelconque des méthodes connues. Par déplacement de l'extrémité de travail du robot sur la partie de trajectoire préprogrammée, on entend le déplacement de ladite extrémité de travail le long de cette partie ou sur des points de passage définissant cette trajectoire. La programmation de l'effort à réaliser par l'extrémité de travail du robot est ainsi directement effectuée par l'opérateur exerçant sur l'extrémité de travail ou un élément solidaire de celle-ci un effort correspondant à l'effort à réaliser.

D'autres caractéristiques et avantages de l'invention ressortiront à la lecture de la description qui suit de modes de réalisation particuliers non limitatifs de l'invention.

### BREVE DESCRIPTION DES FIGURES

Il sera fait référence aux dessins annexés, parmi lesquels :
- la figure 1 est une vue schématique illustrant la phase d'apprentissage de l'effort par le robot selon le procédé de l'invention ;
- la figure 2 est une vue schématique illustrant la réalisation de la tâche par le robot ;
- la figure 3 est une vue schématique illustrant la phase d'apprentissage de l'effort par le robot selon une variante de mise en œuvre du procédé de l'invention.

### DESCRIPTION DETAILLEE DE L'INVENTION

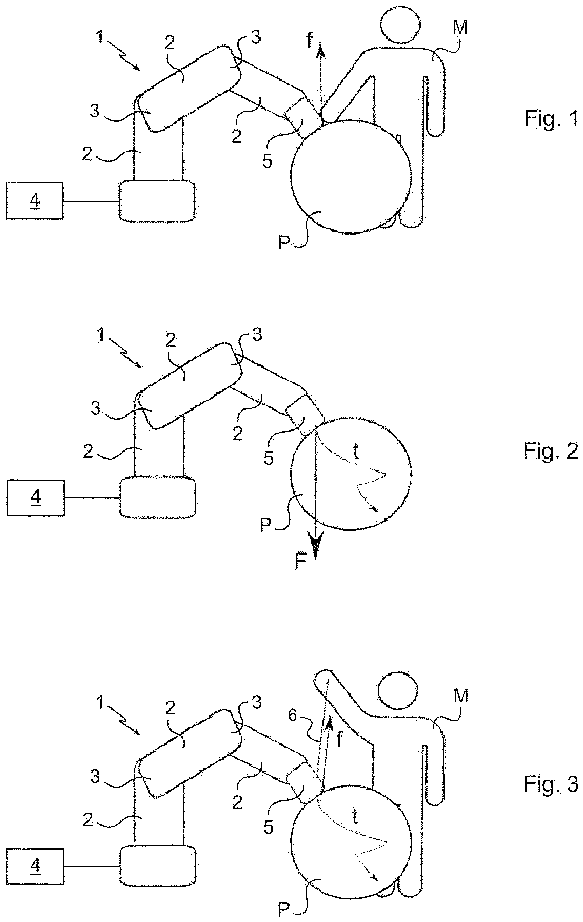

En référence aux figures 1 et 2, le procédé de l'invention est mis en œuvre au moyen d'un bras robotisé 1 comprenant une pluralité de segments 2, dont une extrémité de travail, reliés deux à deux par au moins une articulation 3 pourvue d'un moteur relié à une unité de commande 4 du bras robotisé 1. L'unité de commande 4 est agencée pour pouvoir commander les moteurs du bras robotisé 1. Un tel système robotisé est connu en lui-même et ne sera pas plus détaillé ici.

La tâche à réaliser est ici le polissage d'une pièce P représentée ici par une sphère en utilisant un outil de polissage 5 déplacé selon une trajectoire t en appliquant un effort F.

La programmation du bras robotisé est réalisée par l'exécution d'un programme informatique de configuration du bras robotisé 1 : ce programme est exécuté soit directement par l'unité de commande 4 soit par un ordinateur raccordé à l'unité de commande 4.

La programmation du bras robotisé 1 pour réaliser la tâche en question comprend les phases de :
- programmer la trajectoire t de l'extrémité de travail correspondant à la tâche à réaliser,
- programmer l'effort F à appliquer par l'extrémité de travail le long d'au moins une partie de la trajectoire t (le long de la trajectoire ou en des points de passage définissant la trajectoire),
- vérifier la programmation de la trajectoire t et de l'effort F.

L'extrémité de travail peut avantageusement être équipée de l'outil 5 lors des deux phases de programmation et de la phase de vérification. En outre, la pièce P à polir peut être avantageusement présente.

La phase de programmation de la trajectoire t peut avantageusement être réalisée en faisant déplacer, par l'opérateur M, l'extrémité de travail du bras robotisé 1 le long de la trajectoire t souhaitée, ou sur des points de passage, et en mémorisant des positions de l'extrémité de travail.

Les positions peuvent être mémorisées sur commande de l'opérateur M ou en continu sur toute la trajectoire t.

Dans le premier cas, l'utilisateur arrête l'extrémité de travail du bras robotisé 1 et commande la mémorisation de la position par action sur une interface d'entrée, comme une télécommande ou un bouton sur le robot, reliée à l'unité de commande 4 (ou, en variante, à un organe de commande externe tel qu'un ordinateur).

Dans le deuxième cas, l'opérateur lance sur l'unité de commande 4 une session de programmation de la trajectoire (par exemple par appui sur un bouton prédéterminé d'une télécommande) et l'unité de commande 4 enregistre de façon continue les positions successives de l'extrémité de travail jusqu'à ce que l'opérateur annonce la fin de la session (par exemple par appui sur un bouton prédéterminé d'une télécommande).

Selon l'invention, la phase de programmation de la force F est effectué en faisant déplacer, par l'unité de commande 4, l'extrémité de travail du bras robotisé 1 le long de la trajectoire programmée t, ou sur les points de passage appris uniquement. Pendant cette phase, la motorisation du bras robotisé 1 est asservie pour maintenir l'extrémité de travail en position sur la trajectoire t sans consigne d'effort.

En au moins une position au cours du déplacement, l'opérateur M exerce sur l'extrémité de travail un effort f qui est opposé à l'effort F à appliquer lors de la tâche. L'effort opposé f est appliqué par la main de l'opérateur M qui est en contact direct avec l'extrémité de travail du bras robotisé 1.

L'effort opposé f a une intensité proportionnelle à l'effort F à appliquer lors de la tâche (F = -α.f). Dans le cas présent, l'effort f est d'intensité égale à l'effort F.

L'effort F est ensuite déterminé à partir de l'effort résistant exercé par le bras robotisé 1 pour maintenir l'extrémité de travail sur la trajectoire t, ou sur les points de passage.

L'effort résistant est déterminé par l'unité de commande 4 à partir du courant électrique d'alimentation de la motorisation du bras robotisé 1 nécessaire au maintien de la l'extrémité de travail sur la position. En variante, l'effort résistant est déterminé par l'unité de commande à partir d'une mesure d'un capteur d'effort disposé sur l'extrémité de travail.

L'effort F ainsi déterminé est mémorisé en relation avec la position de l'extrémité de travail lors de l'exercice de l'effort opposé f.

La détermination de l'effort à appliquer et sa mémorisation peuvent être effectuées :
- soit en continu le long d'au moins une partie de la trajectoire,
- soit être activées par une commande de l'opérateur M (l'opérateur M actionne par exemple un bouton d'une télécommande lorsqu'il atteint la position en question et qu'il exerce l'effort opposé.

L'étape finale, recommandée mais optionnelle, de vérification de la programmation consiste ici à commander le bras robotisé 1 pour déplacer l'extrémité de travail le long de la trajectoire t alors que l'opérateur M est en contact avec l'extrémité de travail de manière à ce que l'opérateur ressente l'effort appliqué par le bras robotisé 1.

Dans la variante de la figure 3, l'effort opposé f est exercé au moyen d'un lien mécanique 6, tel qu'un câble ou une tige montée sur rotule, ayant une extrémité reliée à l'extrémité de travail et une extrémité opposée tenue par l'opérateur M. Ce mode d'exercice de l'effort opposé f est avantageux car la direction de la tension du lien mécanique permet de visualiser la direction de l'effort opposé f.

Dans une autre variante, l'effort opposé f est exercé au moyen d'un élément élastique relié à l'extrémité de travail. L'élément élastique peut être un lien souple élastique ou un élément rigide relié à l'extrémité de travail par un organe élastique tel qu'un dynamomètre. Ce mode d'exercice de l'effort opposé f est avantageux car il permet en plus de la direction de la tension du lien, de visualiser l'intensité de l'effort opposé f.

Bien entendu, l'invention n'est pas limitée aux modes de réalisation décrits mais englobe toute variante entrant dans le champ de l'invention telle que définie par les revendications.

En particulier, bien que l'invention soit décrite en relation avec un bras robotisé de type série, l'invention est applicable à tous types de robot et machine commandables en effort. L'invention reste ainsi applicable au cas de robots parallèles, soit dans le cas de plus de deux segments reliés entre eux..

L'opérateur peut appliquer l'effort opposé au moyen d'une poignée de manipulation fixée sur l'extrémité de travail du bras robotisé 1. L'effort résistant est alors de préférence déterminé à partir d'une mesure d'un capteur d'effort disposé sur la poignée de manipulation de l'extrémité de travail du bras robotisé 1.

## Revendications

1. Procédé de programmation d'un effort à exercer par une extrémité de travail d'un robot le long d'au moins une partie d'une trajectoire préprogrammée de l'extrémité de travail, le procédé comprenant les étapes de :
- déplacer l'extrémité de travail du robot sur ladite au moins une partie de la trajectoire préprogrammée, la motorisation du robot étant asservie pour maintenir l'extrémité de travail en position sans consigne d'effort,
- en au moins une position au cours du déplacement, faire exercer sur l'extrémité de travail, par un opérateur, un effort qui est opposé à celui à appliquer lors de la tâche et qui a une intensité proportionnelle à celui à appliquer lors de la tâche,
- déterminer l'effort à appliquer lors de la tâche à partir de l'effort résistant exercé par le robot pour maintenir l'extrémité de travail sur la trajectoire,
- mémoriser l'effort ainsi déterminé en relation avec la position de l'extrémité de travail lors de l'exercice de l'effort opposé.

2. Procédé selon la revendication 1, dans lequel, la tâche devant être réalisé avec un outil, l'extrémité de travail est équipée de l'outil lors du déplacement de l'extrémité de travail le long de la trajectoire programmée.

3. Procédé selon la revendication 1, dans lequel l'effort opposé est exercé au moyen d'un lien mécanique relié à l'extrémité de travail ou à un élément solidaire de celle-ci.

4. Procédé selon la revendication 1, dans lequel l'effort opposé est exercé au moyen d'un élément élastique relié à l'extrémité de travail.

5. Procédé selon l'une quelconque des revendications précédentes, dans lequel la détermination de l'effort à appliquer, suivie de sa mémorisation, est activée par une commande de l'opérateur.

6. Procédé selon l'une quelconque des revendications précédentes, dans lequel la détermination de l'effort à appliquer et sa mémorisation sont effectuées en continu le long d'au moins une partie de la trajectoire.

7. Procédé selon l'une quelconque des revendications précédentes, dans lequel l'effort résistant est déterminé par mesure d'un courant électrique d'alimentation de la motorisation du bras de robot.

8. Procédé selon l'une quelconque des revendications précédentes, dans lequel l'effort résistant est déterminé à partir d'une mesure d'un capteur d'effort disposé sur l'extrémité de travail ou un élément solidaire de celle-ci.

9. Procédé selon l'une quelconque des revendications précédentes, dans lequel l'effort résistant est déterminé à partir d'une mesure d'un capteur d'effort disposé sur une poignée de manipulation de l'extrémité de travail ou un élément solidaire de celle-ci, par l'opérateur.

10. Procédé selon l'une quelconque des revendications précédentes, comprenant une étape finale de vérification de la programmation, au cours de laquelle le bras de robot est commandé pour se déplacer le long de ladite au moins une partie de la trajectoire alors que l'opérateur est en contact avec l'extrémité de travail de manière à ce que l'opérateur ressente l'effort appliqué par le bras de robot.

11. Robot ayant une unité informatique de commande programmée pour mettre en œuvre le procédé selon l'une quelconque des revendications précédentes.

## Patentansprüche

1. Verfahren zur Programmierung einer Kraft, die von einem Arbeitsende eines Roboters entlang mindestens eines Teils einer vorprogrammierten Bahn des Arbeitsendes auszuüben ist, wobei das Verfahren die Schritte umfasst:
- Bewegen des Arbeitsendes des Roboters auf dem genannten mindestens einen Teil der vorprogrammierten Bahn, wobei die Motorisierung des Roboters gesteuert wird, um das Arbeitsende ohne einen Kraftsollwert in Position zu halten,
- an mindestens einer Position während der Bewegung Ausüben einer Kraft durch eine Bedienperson auf das Arbeitsende, wobei die Kraft entgegengesetzt zu der ist, die während der Aufgabe aufzubringen ist, und die eine Intensität hat, die proportional zu der Kraft ist, die während der Aufgabe aufzubringen ist,
- Bestimmen der während der Aufgabe aufzubringenden Kraft anhand der Widerstandskraft, die von dem Roboter ausgeübt wird, um das Arbeitsende auf der Bahn zu halten,
- Speichern der so bestimmten Kraft in Bezug auf die Position des Arbeitsendes während der Ausübung der entgegengesetzten Kraft.

2. Verfahren nach Anspruch 1, bei dem, da die Aufgabe mit einem Werkzeug ausgeführt werden muss, das Arbeitsende während der Bewegung des Arbeitsendes entlang der programmierten Bahn mit dem Werkzeug ausgestattet ist.

3. Verfahren nach Anspruch 1, bei dem die entgegengesetzte Kraft mittels einer mechanischen Verbindung ausgeübt wird, die mit dem Arbeitsende oder einem fest mit diesem verbundenen Element verbunden ist.

4. Verfahren nach Anspruch 1, bei dem die entgegengesetzte Kraft mittels eines elastischen Elements ausgeübt wird, das mit dem Arbeitsende verbunden ist.

5. Verfahren nach einem der vorhergehenden Ansprüche, bei dem die Bestimmung der aufzubringenden Kraft, gefolgt von ihrer Speicherung, durch einen Befehl der Bedienperson aktiviert wird.

6. Verfahren nach einem der vorhergehenden Ansprüche, bei dem die Bestimmung der aufzubringenden Kraft und ihre Speicherung kontinuierlich entlang mindestens eines Teils der Bahn erfolgen.

7. Verfahren nach einem der vorhergehenden Ansprüche, bei dem die Widerstandskraft durch Messen eines elektrischen Stroms zur Versorgung der Motorisierung des Roboterarms bestimmt wird.

8. Verfahren nach einem der vorhergehenden Ansprüche, bei dem die Widerstandskraft anhand einer Messung eines Kraftsensors bestimmt wird, der an dem Arbeitsende oder einem fest mit diesem verbundenen Element angeordnet ist.

9. Verfahren nach einem der vorhergehenden Ansprüche, bei dem die Widerstandskraft anhand einer Messung eines Kraftsensors bestimmt wird, der an einem Bedienungsgriff zur Bedienung des Arbeitsendes oder eines fest mit diesem verbundenen Elements durch die Bedienperson angeordnet ist.

10. Verfahren nach einem der vorhergehenden Ansprüche, umfassend einen finalen Schritt der Überprüfung der Programmierung, während dessen der Roboterarm so gesteuert wird, dass er sich entlang des genannten mindestens einen Teils der Bahn bewegt, während die Bedienperson mit dem Arbeitsende derart in Kontakt ist, dass die Bedienperson die von dem Roboterarm aufgebrachte Kraft fühlt.

11. Roboter, der eine Computersteuereinheit hat, die programmiert ist, um das Verfahren nach einem der vorhergehenden Ansprühe auszuführen.

## Claims

1. A method for programming a force to be exerted by a working end of a robot along at least a part of a preprogrammed trajectory of the working end, the method comprising the steps of:
- moving the working end of the robot on said at least a part of the preprogrammed trajectory, the motorization of the robot being controlled to maintain the working end in position without a force setting,
- in at least one position during the movement, an operator causing a force to be exerted on the working end, which force is opposed to that to be applied during the task and which has an intensity proportional to that to be applied during the task,
- determining the force to be applied during the task from the resistant force exerted by the robot to maintain the working end on the trajectory,
- storing the force thus determined in association with the position of the working end during the exertion of the opposed force.

2. The method as claimed in claim 1, in which, since the task must be performed using a tool, the working end is equipped with the tool during the movement of the working end along the programmed trajectory.

3. The method as claimed in claim 1, in which the opposed force is exerted by means of a mechanical link connected to the working end or to an element secured thereto.

4. The method as claimed in claim 1, in which the opposed force is exerted by means of an elastic element connected to the working end.

5. The method as claimed in any one of the preceding claims, in which the determination of the force to be applied, followed by its storing, is activated by an operator command.

6. The method as claimed in any one of the preceding claims, in which the determination of the force to be applied and its storing are carried out continuously along at least a part of the trajectory.

7. The method as claimed in any one of the preceding claims, in which the resistant force is determined by measuring an electrical supply current of the motorization of the robot arm.

8. The method as claimed in any one of the preceding claims, in which the resistant force is determined from a measurement by a force sensor arranged on the working end or an element secured thereto.

9. The method as claimed in any one of the preceding claims, in which the resistant force is determined from a measurement by a force sensor arranged on a handgrip of the working end or an element secured thereto, by the operator.

10. The method as claimed in any one of the preceding claims, comprising a final step to check the programming, during which the robot arm is commanded to move along said at least a part of the trajectory while the operator is in contact with the working end such that the operator feels the force applied by the robot arm.

11. A robot having a computer control unit programmed to implement the method as claimed in any one of the preceding claims.
